# EUROPEAN PATENT SPECIFICATION

(11) **EP 3 939 939 B1**
(45) Date of publication and mention of the grant of the patent: **25.01.2023**
(21) Application number: 20806727.2
(22) Date of filing: 12.05.2020
(51) Int. Cl.: C01G 53/00, H01M 4/525, H01M 4/62, H01M 4/36, H01M 10/052, H01M 4/131, H01M 10/0525, H01M 4/02

(54) **POSITIVE ELECTRODE ACTIVE MATERIAL FOR SECONDARY BATTERY, METHOD FOR PREPARING SAME, AND LITHIUM SECONDARY BATTERY COMPRISING SAME**
POSITIVELEKTRODENAKTIVMATERIAL FÜR SEKUNDÄRBATTERIE, VERFAHREN ZUR HERSTELLUNG DAVON UND LITHIUMSEKUNDÄRBATTERIE DAMIT
MATÉRIAU ACTIF D'ÉLECTRODE POSITIVE POUR BATTERIE SECONDAIRE, SA MÉTHODE DE PRÉPARATION ET BATTERIE SECONDAIRE AU LITHIUM LE COMPRENANT

(30) Priority: 13.05.2019 KR 20190055799
(43) Date of publication of application: 19.01.2022
(73) Proprietor: LG CHEM, LTD., Yeongdeungpo-gu, Seoul 07336 (KR)
(72) Inventor: EOM, Jun Ho, Daejeon 34122 (KR); LIM, Chae Jin, Daejeon 34122 (KR); JUNG, Ji Hun, Daejeon 34122 (KR); AHN, Dong Joon, Daejeon 34122 (KR); MOK, Duck Gyun, Daejeon 34122 (KR)
(74) Representative: Hoffmann Eitle
(86) International application number: PCT/KR2020/006223
(87) International publication number: WO 2020/231147

(56) References cited:
- KR-A- 20130 019 399
- KR-A- 20170 100 534
- KR-A- 20180 077 026
- KR-A- 20190 046 425
- KR-B1- 101 956 355
- US-A1- 2015 147 655
- US-A1- 2018 145 324

## Description

### TECHNICAL FIELD

### Cross-reference to Related Applications

This application claims priority from Korean Patent Application No. 10-2019-0055799, filed on May 13, 2019.

### Technical Field

The present invention relates to a positive electrode active material for a secondary battery, a method of preparing the same, and a lithium secondary battery including the positive electrode active material.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide (LiCoO₂), lithium nickel oxide (LiNiO₂), lithium manganese oxide (LiMnO₂ or LiMn₂O₄, etc.), or a lithium iron phosphate compound (LiFePO₄) has been used as a positive electrode active material of the lithium secondary battery. Also, as a method to improve low thermal stability while maintaining excellent reversible capacity of the LiNiO₂, a lithium composite metal oxide (hereinafter, simply referred to as 'NCM-based lithium transition metal oxide' or 'NCA-based lithium transition metal oxide') in which a portion of nickel (Ni) is substituted with cobalt (Co) or manganese (Mn)/aluminum (Al), has been developed.

Studies have recently been made to increase capacity by increasing a nickel (Ni) content in the NCM-based/NCA-based lithium composite transition metal oxides. However, with respect to a Ni-rich positive electrode active material having a high nickel content, structural stability and chemical stability are reduced, and, since a residual amount of lithium by-products present in the form of LiOH and Li₂CO₃ on a surface of the positive electrode active material is increased as the nickel content in the positive electrode active material is increased, resulting gas generation and swelling phenomenon occur, and thus, lifetime and stability of the battery are reduced. Thus, with respect to the Ni-rich positive electrode active material, a washing process for removing the lithium by-products remaining on the surface of the positive electrode active material is essential. However, there is a limitation in that, if the washing process for removing the lithium by-products is performed, life characteristics are rapidly degraded due to surface defects of the positive electrode active material. Particularly, if a ratio of a washing liquid is increased to increase removal efficiency of the lithium by-products, the removal of the lithium by-products is effectively performed, but, since the surface defects of the positive electrode active material are increased, the life characteristics are more degraded.

In order to improve the degradation of the life characteristics due to the washing process, coating was performed at a relatively low temperature of about 260°C to about 350°C using H₃BO₃ or the like after washing. However, the Ni-rich positive electrode active material has a limitation in that initial resistance is rapidly increased when the coating of the H₃BO₃ or the like is performed.

US 2018/145324 A1 discloses a lithium composite oxide comprising more than 70 mol% of Li and exhibiting a coating of Li phosphate. A coating of LiF is also mentioned.

Thus, there is a need to develop a Ni-rich positive electrode active material having a low residual amount of lithium by-products, secured stability, and excellent initial resistance characteristics and life characteristics while meeting high capacity.

### DISCLOSURE OF THE INVENTION

### TECHNICAL PROBLEM

An aspect of the present invention provides a method of preparing a positive electrode active material, which may secure stability and may achieve excellent life characteristics by improving surface defects of the positive electrode active material due to a washing process while resulting in a small residual amount of lithium by-products by performing the washing process in the Ni-rich positive electrode active material including 70 mol% or more of nickel (Ni) for securing high capacity, and, furthermore, may improve a problem of increase in initial resistance due to surface coating of the positive electrode active material, and a positive electrode active material prepared thereby.

### TECHNICAL SOLUTION

According to an aspect of the present invention, there is provided a positive electrode active material for a secondary battery which includes lithium composite transition metal oxide particles including 70 mol% or more of nickel (Ni) among total metals excluding lithium; and a coating portion formed on surfaces of the lithium composite transition metal oxide particles, wherein the coating portion includes a compound including fluorine and at least one selected from the group consisting of aluminum (Al), titanium (Ti), magnesium (Mg), zirconium (Zr), tungsten (W), and strontium (Sr), a Brunauer-Emmett-Teller (BET) specific surface area is in a range of 0.1 m²/g to 0.9 m²/g, and an amount of a lithium by-product remaining on a surface of the positive electrode active material is 0.65 wt% or less based on a total weight of the positive electrode active material.

According to another aspect of the present invention, there is provided a method of preparing a positive electrode active material for a secondary battery which includes preparing a lithium composite transition metal oxide including 70 mol% or more of nickel (Ni) among total metals excluding lithium; washing the lithium composite transition metal oxide; and coating the lithium composite transition metal oxide by mixing the washed lithium composite transition metal oxide with a fluorine-based polymer and a metal coating source including at least one metal selected from the group consisting of Al, Ti, Mg, Zr, W, and Sr, and performing a heat treatment at 600°C or more.

According to another aspect of the present invention, there is provided a positive electrode and a lithium secondary battery which include the positive electrode active material.

### ADVANTAGEOUS EFFECTS

According to the present invention, in a high-Ni positive electrode active material, stability may be secured and excellent life characteristics may be achieved by improving surface defects of the positive electrode active material due to a washing process while reducing a residual amount of lithium by-products. Also, a uniform coating may be formed on a surface of the positive electrode active material, and a problem of increase in initial resistance and a high resistance increase rate due to the surface coating of the positive electrode active material may be improved.

### BRIEF DESCRIPTION OF THE DRAWINGS

FIG. 1 is a graph in which initial resistances during 0.2 C discharge of lithium secondary batteries prepared by using positive electrode active materials according to examples and comparative examples are measured;
FIG. 2 is a graph in which initial resistances during 2.0 C discharge of the lithium secondary batteries prepared by using the positive electrode active materials according to the examples and the comparative examples are measured;
FIG. 3 is a graph in which capacity retentions of lithium secondary batteries prepared by using positive electrode active materials according to examples and comparative examples are measured; and
FIG. 4 is a graph in which resistance increase rates of the lithium secondary batteries prepared by using the positive electrode active materials according to the examples and the comparative examples are measured.

### MODE FOR CARRYING OUT THE INVENTION

Hereinafter, the present invention will be described in more detail to allow for a clearer understanding of the present invention.

### <Method of Preparing Positive Electrode Active Material and Positive Electrode Active Material>

The present invention prepares a positive electrode active material for a secondary battery by including the steps of: preparing a lithium composite transition metal oxide including 70 mol% or more of nickel (Ni) among total metals excluding lithium; washing the lithium composite transition metal oxide; and coating the lithium composite transition metal oxide by mixing the washed lithium composite transition metal oxide with a fluorine-based polymer and a metal coating source including at least one metal selected from the group consisting of aluminum (Al), titanium (Ti), magnesium (Mg), zirconium (Zr), tungsten (W), and strontium (Sr), and performing a heat treatment at 600°C or more. Hereinafter, each step of the present invention will be described in more detail.

First, a lithium composite transition metal oxide including 70 mol% or more of nickel (Ni) among total metals excluding lithium is prepared.

The lithium composite transition metal oxide used in the present invention, for example, may be an NCM-based lithium composite transition metal oxide including nickel (Ni), cobalt (Co), and manganese (Mn), or may be an NCA-based lithium composite transition metal oxide including nickel (Ni), cobalt (Co), and aluminum (Al). Also, the lithium composite transition metal oxide may be a quaternary lithium composite transition metal oxide that essentially includes four components of nickel (Ni), cobalt (Co), manganese (Mn), and aluminum (Al). The quaternary lithium composite transition metal oxide may improve stability, and may improve lifetime while not degrading output characteristics and capacity characteristics in comparison to the NCM/NCA-based positive electrode active materials.

The lithium composite transition metal oxide is a Ni-rich lithium composite transition metal oxide including 70 mol% or more of nickel (Ni) among total metals excluding lithium, wherein an amount of the nickel (Ni) may preferably be 80 mol% or more and may more preferably be 85 mol% or more. Since the amount of the nickel (Ni) in an amount of the total metals excluding lithium of the lithium composite transition metal oxide satisfies 70 mol% or more, high capacity may be secured.

Specifically, the lithium composite transition metal oxide may be represented by Formula 1 below.

[Formula 1] LiₚNi_{1-(x1+y1+z1)}COₓ₁M^{a}_{y1}M^{b}_{z1}O₂

In Formula 1, M^{a} is at least one selected from the group consisting of manganese (Mn) and aluminum (Al), M^{b} is at least one selected from the group consisting of zirconium (Zr), boron (B), tungsten (W), magnesium (Mg), cerium (Ce), hafnium (Hf), tantalum (Ta), titanium (Ti), strontium (Sr), barium (Ba), fluorine (F), phosphorus (P), sulfur (S), and lanthanum (La), 0.9≤p≤1.1, 0≤x1≤0.2, 0≤y1≤0.2, 0≤z1≤0.1, and 0<x1+y1+z1≤0.3.

In the lithium composite transition metal oxide of Formula 1, lithium (Li) may be included in an amount corresponding to p, that is, 0.9≤p≤1.1. When p is less than 0.9, capacity may be reduced, and, when p is greater than 1.1, since particles are sintered in a sintering process, the preparation of the positive electrode active material may be difficult. The Li may more preferably be included in an amount satisfying 1.0≤p≤1.05, in consideration of balance between a significant capacity characteristics improvement effect of the positive electrode active material and sinterability during the preparation of the active material due to the control of the amount of the Li.

In the lithium composite transition metal oxide of Formula 1, Ni may be included in an amount corresponding to 1-(x1+y1+z1), for example, 0.7≤1-(x1+y1+z1)<1. If the amount of the Ni in the lithium composite transition metal oxide of Formula 1 is 0.7 or more, since the amount of the Ni, which is sufficient to contribute to charge and discharge, is secured, high capacity may be achieved. The Ni may more preferably be included in an amount satisfying 0.80≤1-(x1+y1+z1)≤0.99.

In the lithium composite transition metal oxide of Formula 1, Co may be included in an amount corresponding to x1, that is, 0≤x1≤0.2. In a case in which the amount of the Co in the lithium composite transition metal oxide of Formula 1 is greater than 0.2, there is a concern that cost may increase. The Co may specifically be included in an amount satisfying 0.05≤x1≤0.2 in consideration of a significant capacity characteristics improvement effect due to the inclusion of the Co.

In the lithium composite transition metal oxide of Formula 1, M^{a} may be Mn or Al, or may be Mn and Al, wherein these metallic elements may improve stability of the active material and, as a result, may improve stability of the battery. The M^{a} may be included in an amount corresponding to y1, that is, 0≤y1≤0.2 in consideration of a life characteristics improvement effect. If y1 in the lithium composite transition metal oxide of Formula 1 is greater than 0.2, there is a concern that output characteristics and capacity characteristics of the battery may be degraded, and the M^{a} may specifically be included in an amount satisfying 0.05≤y1≤0.2.

In the lithium composite transition metal oxide of Formula 1, M^{b} may be a doping element included in a crystal structure of the lithium composite transition metal oxide, wherein the M^{b} may be included in an amount corresponding to z1, that is, 0≤z1≤0.1.

The lithium composite transition metal oxide is not limited thereto, but, for example, may be prepared by a method in which a positive electrode active material precursor including nickel (Ni) and cobalt (Co) and including at least one selected from the group consisting of manganese (Mn) and aluminum (Al) and a lithium-containing raw material are mixed and sintered at 600°C to 900°C.

In this case, the positive electrode active material precursor may be an NCM-based compound including nickel (Ni), cobalt (Co), and manganese (Mn), or may be an NCA-based compound including nickel (Ni), cobalt (Co), and aluminum (Al), and may be a quaternary positive electrode active material precursor that essentially includes four components of nickel (Ni), cobalt (Co), manganese (Mn), and aluminum (Al). Also, the positive electrode active material precursor may be a positive electrode active material precursor that further includes M^{b} in addition to nickel (Ni), cobalt (Co), manganese (Mn), and/or aluminum (Al). The positive electrode active material precursor may be used by purchasing a commercially available positive electrode active material precursor, or may be prepared according to a method of preparing a positive electrode active material precursor which is well known in the art.

For example, the nickel-cobalt-manganese precursor may be prepared by a co-precipitation reaction by adding an ammonium cation-containing complexing agent and a basic compound to a transition metal solution including a nickel-containing raw material, a cobalt-containing raw material, and a manganese-containing raw material.

The nickel-containing raw material, for example, may include nickel-containing acetic acid salts, nitrates, sulfates, halides, sulfides, hydroxides, oxides, or oxyhydroxides, and may specifically include Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide, or a combination thereof, but the present invention is not limited thereto.

The cobalt-containing raw material may include cobalt-containing acetic acid salts, nitrates, sulfates, halides, sulfides, hydroxides, oxides, or oxyhydroxides, and may specifically include Co(OH)₂, CoOOH, Co(OCOCH₃)₂·4H₂O, Co(NO₃)₂·6H₂O, Co(SO₄)₂, Co(SO₄)₂·7H₂O, or a combination thereof, but the present invention is not limited thereto.

The manganese-containing raw material, for example, may include manganese-containing acetic acid salts, nitrates, sulfates, halides, sulfides, hydroxides, oxides, oxyhydroxides, or a combination thereof, and may specifically include a manganese oxide such as Mn₂O₃, MnO₂, and Mn₃O₄; a manganese salt such as MnCO₃, Mn(NO₃)₂, MnSO₄, manganese acetate, manganese dicarboxylate, manganese citrate, and a fatty acid manganese salt; a manganese oxyhydroxide, manganese chloride, or a combination thereof, but the present invention is not limited thereto.

The transition metal solution may be prepared by adding the nickel-containing raw material, the cobalt-containing raw material, and the manganese-containing raw material to a solvent, specifically water, or a mixture of water and an organic solvent (e.g., alcohol etc.) which may be uniformly mixed with the water, or may be prepared by mixing an aqueous solution of the nickel-containing raw material, an aqueous solution of the cobalt-containing raw material, and the manganese-containing raw material.

The ammonium cation-containing complexing agent, for example, may include NH₄OH, (NH₄)₂SO₄, NH₄NO₃, NH₄Cl, CH₃COONH₄, (NH₄)₂CO₃, or a combination thereof, but the present invention is not limited thereto. The ammonium cation-containing complexing agent may be used in the form of an aqueous solution, and, in this case, water or a mixture of water and an organic solvent (specifically, alcohol etc.), which may be uniformly mixed with the water, may be used as a solvent.

The basic compound may include a hydroxide of alkali metal or alkaline earth metal, such as NaOH, KOH, or Ca(OH)₂, a hydrate thereof, or a combination thereof. The basic compound may also be used in the form of an aqueous solution, and, in this case, water or a mixture of water and an organic solvent (specifically, alcohol etc.), which may be uniformly mixed with the water, may be used as a solvent.

The basic compound is added to adjust a pH of a reaction solution, wherein the basic compound may be added in an amount such that the pH of the metal solution is 11 to 13.

The co-precipitation reaction may be performed in a temperature range of 40°C to 70°C in an inert atmosphere such as nitrogen or argon.

Particles of a nickel-cobalt-manganese hydroxide are formed by the above-described process, and are precipitated in the reaction solution. The precipitated nickel-cobalt-manganese hydroxide particles may be separated according to a conventional method and dried to prepare a nickel-cobalt-manganese precursor.

The positive electrode active material precursor prepared by the above method and a lithium-containing raw material may be mixed, or the positive electrode active material precursor and the lithium-containing raw material may be mixed and sintered at 600°C to 900°C, for example, 600°C to 800°C to obtain a lithium composite transition metal oxide.

As the lithium-containing raw material, lithium-containing sulfates, nitrates, acetic acid salts, carbonates, oxalates, citrates, halides, hydroxides, or oxyhydroxides may be used, and these materials are not particularly limited as long as they may be dissolved in water. Specifically, the lithium source may include Li₂CO₃, LiNO₃, LiNO₂, LiOH, LiOH· H₂O, LiH, LiF, LiCl, LiBr, LiI, CH₃COOLi, Li₂O, Li₂SO₄, CH₃COOLi, or Li₃C₆H₅O₇, and any one thereof or a mixture of two or more thereof may be used.

Next, a lithium by-product present on surfaces of lithium composite transition metal oxide particles is removed by washing the lithium composite transition metal oxide.

With respect to a high-Ni lithium composite transition metal oxide, since it is structurally unstable in comparison to a lithium composite transition metal oxide containing a low nickel content, more lithium by-products, such as unreacted lithium hydroxide (LiOH) or lithium carbonate (Li₂CO₃), are generated in a preparation process. For example, with respect to a lithium composite transition metal oxide in which a nickel fraction is less than 80 mol%, an amount of lithium by-product after synthesis is in a range of about 0.5 wt% to about 0.6 wt%, but, with respect to a lithium composite transition metal oxide in which the nickel fraction is 80 mol% or more, the amount of the lithium by-product after synthesis is high at about 1 wt%. In a case in which a large amount of the lithium by-product is present in the positive electrode active material, the lithium by-product reacts with an electrolyte solution to generate gas and cause a swelling phenomenon, and, as a result, high-temperature stability is significantly reduced. Thus, a washing process for removing the lithium by-product from the lithium composite transition metal oxide containing a high concentration of nickel is essentially required.

The washing process, for example, may be performed by a method of adding the lithium composite transition metal oxide to a washing liquid, such as distilled water or tap water, and stirring. In this case, a temperature of the washing liquid used during the washing may be in a range of 1°C to 80°C, for example, 5°C to 50°C, and washing time may be in a range of 3 minutes to 60 minutes, for example, 5 minutes to 40 minutes. When the washing temperature and the washing time respectively satisfy the above ranges, the lithium by-product may be effectively removed.

The washing process may be performed by mixing the washing liquid and the lithium composite transition metal oxide in a part by weight ratio of 100:20 to 100:300, preferably 100:50 to 100:200, and more preferably 100:60 to 100:180. When the mixing ratio of the washing liquid to the lithium composite transition metal oxide satisfies the above range, surface defects of the lithium composite transition metal oxide may be reduced as much as possible while the lithium by-product may be effectively removed.

Next, coating is performed by mixing the washed lithium composite transition metal oxide with a fluorine-based polymer and a metal coating source including at least one metal selected from the group consisting of Al, Ti, Mg, Zr, W, and Sr, and performing a heat treatment at 600°C or more.

Typically, in a case in which the surfaces of the lithium composite transition metal oxide particles were coated with a fluorine-based polymer, for example, polyvinylidene fluoride (PVDF), there were limitations in that an effect of increasing lifetime was limited, a resistance increase rate was increased, and an improvement in thermal stability was limited. However, in the present invention, since a composite coating treatment was performed on the surfaces of the lithium composite transition metal oxide particles using the metal coating source including Al or the like as well as the fluorine-based polymer, a problem of increase in initial resistance and a high resistance increase rate was solved.

The washed lithium composite transition metal oxide, for example, may be dried at 80°C to 140°C, and the lithium composite transition metal oxide dried after the washing, the fluorine-based polymer, and the metal coating source may be mixed.

The fluorine-based polymer may include at least one selected from the group consisting of polyvinylidene fluoride (PVDF), polyvinylidene fluoride-hexafluoroethylene copolymer (PVDF-co-HFP), polytetrafluoroethylene (PTFE), and perfluoroalkoxy (PFA), and polyvinylidene fluoride (PVDF) may be more preferably used because of high reactivity with the lithium composite transition metal oxide due to its high volume to weight ratio in the mixing process.

The fluorine-based polymer may be mixed in an amount of 0.03 part by weight to 5 parts by weight, preferably 0.05 part by weight to 3 parts by weight, and more preferably 0.1 part by weight to 2 parts by weight based on 100 parts by weight of the lithium composite transition metal oxide. In a case in which the lithium composite transition metal oxide and the fluorine-based polymer are mixed within the above range, more uniform coating may be performed, surface defects due to the washing may be effectively improved, and there is an effect of easily controlling Brunauer-Emmett-Teller (BET) due to a reaction with the surface of the lithium composite transition metal oxide caused by a uniform melting point of the polymer.

The metal coating source may include at least one selected from the group consisting of Al(OH)₃, Al₂O₃, TiO₂, Zr(OH)₄, ZrO₂, Mg(OH)₂, MgO, H₂WO₄, WO₃, Sr(OH)₂, and SrO, may more preferably include Al due to high reactivity with lithium remaining on the surface, and, particularly, since a melting point of Al(OH)₃ is low in the region of 300°C, similar to that of the fluorine-based polymer, for example, polyvinylidene fluoride (PVDF), the reactivity with the lithium remaining on the surface is high, and thus, it is advantageous in forming a Li-F, Al-F, or Li-Al-O solid solution and, particularly, it is more preferable because it is advantageous for a reaction with the surface positive electrode material at a high temperature. For example, with respect to Al₄C₃, since its melting point is very high in the region of 2,200°C, a reactable surface area is low and an amount of Al in the total source added is about 75 wt%, which is higher than about 35 wt% in case of the Al(OH)₃. Assuming that the same amount of Al is coated, it may be considered that, since the coating source itself is less added, a reaction area between the surface and the coating source is reduced and the reactivity is reduced.

The metal coating source may be mixed in an amount of 0.01 part by weight to 5 parts by weight, preferably 0.03 part by weight to 3 parts by weight, and more preferably 0.01 part by weight to 1 part by weight based on 100 parts by weight of the lithium composite transition metal oxide. In a case in which the lithium composite transition metal oxide and the metal coating source are mixed within the above range, degradation of the lifetime may be effectively improved by the reaction of the lithium composite transition metal oxide with the metal coating source.

Also, the fluorine-based polymer and the metal coating source may be mixed in a part by weight ratio of 1:0.01 to 1:5, preferably 1:0.1 to 1:3, and more preferably 1:0.3 to 1:3. In a case in which the fluorine-based polymer and the metal coating source are mixed within the above range, a side reaction may be suppressed by a reduction in the BET due to polymer coating while the surface defects due to the washing are effectively improved.

Preferably, the coating may be performed by mixing the lithium composite transition metal oxide, polyvinylidene fluoride (PVDF), and Al(OH)₃.

The coating may be performed by performing a heat treatment at 600°C or more, preferably 600°C to 800°C, and more preferably 700°C to 800°C. In a case in which the heat treatment temperature of the coating is less than 600°C, uniform coating of the fluorine-based polymer is difficult, and the surface defects due to the washing may not be effectively improved. Since the coating is performed by performing the heat treatment at 600°C or more, preferably 600°C to 800°C, and more preferably 700°C to 800°C, stability is secured by effectively reducing the BET specific surface area that has been increased due to the washing and a decrease in resistance increase rate and excellent life characteristics may be achieved.

Next, a positive electrode active material for a secondary battery according to the present invention will be described.

The positive electrode active material for a secondary battery of the present invention prepared according to the above-described method includes lithium composite transition metal oxide particles including 70 mol% or more of nickel (Ni) among total metals excluding lithium; and a coating portion formed on surfaces of the lithium composite transition metal oxide particles, wherein the coating portion includes a compound including fluorine and at least one selected from the group consisting of Al, Ti, Mg, Zr, W, and Sr, a BET specific surface area is in a range of 0.1 m²/g to 0.9 m²/g, and an amount of a lithium by-product remaining on a surface of the positive electrode active material is 0.65 wt% or less based on a total weight of the positive electrode active material.

The lithium composite transition metal oxide is a Ni-rich lithium composite transition metal oxide including 70 mol% or more of nickel (Ni) among total metals excluding lithium, wherein an amount of the nickel (Ni) may preferably be 80 mol% or more and the amount of the nickel (Ni) may more preferably be 85 mol% or more. Since the amount of the nickel (Ni) among the total metals excluding lithium of the lithium composite transition metal oxide satisfies 70 mol% or more, high capacity may be secured.

Specifically, the lithium composite transition metal oxide may be represented by Formula 1 below.

[Formula 1] LiₚNi_{1-(x1+y1+z1)}COₓ₁M^{a}_{y1}M^{b}_{z1}O₂

In Formula 1, M^{a} is at least one selected from the group consisting of Mn and Al, M^{b} is at least one selected from the group consisting of Zr, B, W, Mg, Ce, Hf, Ta, Ti, Sr, Ba, F, P, S, and La, 0.9≤p≤1.1, 0≤x1≤0.2, 0≤y1≤0.2, 0≤z1≤0.1, and 0≤x1+y1+z1≤0.3. Since specific specifications of the lithium composite transition metal oxide represented by Formula 1 are the same as described in the preparation method, detailed descriptions will be omitted.

The coating portion includes a compound including fluorine and at least one selected from the group consisting of Al, Ti, Mg, Zr, W, and Sr.

With respect to the positive electrode active material according to the present invention as described above, since the coating portion is formed by mixing the fluorine-based polymer and the metal coating source including at least one metal selected from the group consisting of Al, Ti, Mg, Zr, W, and Sr after the washing and performing a heat treatment at 600°C or more, preferably 600°C to 800°C, and more preferably 700°C to 800°C, a residual amount of the lithium by-product is significantly smaller than that of a conventional Ni-rich positive electrode active material and the BET specific surface area increased due to the washing is effectively decreased, and thus, the surface defects may be improved, excellent stability may be achieved, and the initial resistance may be reduced.

The amount of the lithium by-product remaining on the surface of the positive electrode active material according to the present invention may satisfies 0.65 wt% or less, preferably 0.60 wt% or less, and more preferably 0.56 wt% or less. Thus, in a case in which a secondary battery is prepared by using the positive electrode active material according to the present invention, gas generation and a swelling phenomenon during charge and discharge may be effectively suppressed.

Also, the positive electrode active material according to the present invention may have a BET specific surface area of 0.1 m²/g to 0.9 m²/g, preferably 0.2 m²/g to 0.8 m²/g, and more preferably 0.3 m²/g to 0.7 m²/g. With respect to the positive electrode active material prepared by the preparation method of the present invention, since the coating portion is formed by performing a heat treatment at 600°C or more, preferably 600°C to 800°C, and more preferably 700°C to 800°C, the BET specific surface area increased due to the washing is effectively decreased, and thus, stability may be secured and excellent life characteristics may be achieved.

### <Positive Electrode and Secondary Battery>

According to another embodiment of the present invention, provided are a positive electrode for a lithium secondary battery and a lithium secondary battery which include the above positive electrode active material.

Specifically, the positive electrode includes a positive electrode collector and a positive electrode active material layer which is disposed on the positive electrode collector and includes the positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 um, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode active material layer may include a conductive agent and a binder in addition to the above-described positive electrode active material.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on a total weight of the positive electrode active material layer.

Furthermore, the binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which includes the above-described positive electrode active material as well as selectively the binder and the conductive agent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

According to another embodiment of the present invention, an electrochemical device including the positive electrode is provided. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 um, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material. The negative electrode active material layer may be prepared by coating a composition for forming a negative electrode in the form of a slurry, which includes selectively the binder and the conductive agent as well as the negative electrode active material, on the negative electrode collector and drying the coated negative electrode collector, or may be prepared by casting the composition for forming a negative electrode on a separate support and then laminating a film separated from the support on the negative electrode collector.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{α}(0 < α < 2), SnO₂, vanadium oxide, and lithium vanadium oxide; or a composite including the metallic compound and the carbonaceous material such as a SiC composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN (CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

LiOH was added to Ni_{0.9}Co_{0.05}Mn_{0.05}(OH)₂ and mixed such that a molar ratio of Li/Metal(Ni,Co,Mn) became 1.05, and the mixed powder was introduced into an alumina crucible for a heat treatment. Thereafter, the mixed powder was sintered at 740°C for 12 hours to prepare a lithium composite transition metal oxide of Li_{1.05}Ni_{0.9}Co_{0.05}Mn_{0.05}O₂ (D₅₀=4.3 um) .

Washing was performed for 15 minutes by mixing distilled water at 25°C and the Li_{1.05}Ni_{0.9}Co_{0.05}Mn_{0.05}O₂ lithium composite transition metal oxide in amounts of 140 g and 168 g (weight ratio of 100:120), respectively. Thereafter, 0.1 part by weight of polyvinylidene fluoride (PVDF) and 0.09 part by weight of Al(OH)₃ were mixed based on 100 parts by weight of the lithium composite transition metal oxide dried at 130°C, and heat-treated at 600°C to prepare a positive electrode active material in which a coating portion was formed on a surface thereof.

### Example 2

A positive electrode active material was prepared in the same manner as in Example 1 except that MgO was used instead of the Al(OH)₃.

### Example 3

A positive electrode active material was prepared in the same manner as in Example 1 except that Al₄C₃ was used instead of the Al(OH)₃.

### Example 4

A positive electrode active material was prepared in the same manner as in Example 1 except that a coating portion was formed by performing a heat treatment at 700°C instead of 600°C.

### Example 5

A positive electrode active material was prepared in the same manner as in Example 1 except that a coating portion was formed by performing a heat treatment at 800°C instead of 600°C.

### Comparative Example 1

A positive electrode active material was prepared in the same manner as in Example 1 except that polyvinylidene fluoride (PVDF) and Al(OH)₃ were not mixed with the lithium composite transition metal oxide dried after the washing.

### Comparative Example 2

A positive electrode active material was prepared in the same manner as in Example 1 except that 0.5 part by weight of H₃BO₃ was mixed based on 100 parts by weight of the lithium composite transition metal oxide dried after the washing, and heat-treated at 300°C to form a coating portion on a surface thereof.

### Comparative Example 3

A positive electrode active material was prepared in the same manner as in Example 1 except that 0.1 part by weight of polyvinylidene fluoride (PVDF) was mixed based on 100 parts by weight of the lithium composite transition metal oxide dried after the washing, and heat-treated to form a coating portion on a surface thereof.

### Comparative Example 4

A positive electrode active material was prepared in the same manner as in Example 1 except that a coating portion was formed by performing a heat treatment at 500°C instead of 600°C.

### [Experimental Example 1: Lithium By-product Residual Amount and BET Specific Surface Area Evaluation]

After 5 g of each of the positive electrode active materials prepared in Examples 1 to 5 and Comparative Examples 1 to 4 was dispersed in 100 mL of water, a change in pH was measured while the solution was titrated with 0.1 M HCl to obtain a pH titration curve. A residual amount of LiOH and a residual amount of Li₂CO₃ in each positive electrode active material were calculated by using the pH titration curve, and a sum of these values was evaluated as a total residual amount of lithium by-products and is listed in Table 1 below. A BET specific surface area was measured using a gas adsorption analyzer (BELSORP mini II), and the results thereof are presented in Table 1 below.

**[Table 1]**

| | LiOH residual amount (wt%) | Li₂CO₃ residual amount (wt%) | Total lithium by-product residual amount (wt%) | BET specific surface area (m²/g) |
|---|---|---|---|---|
| Example 1 | 0.294 | 0.243 | 0.537 | 0.70 |
| Example 2 | 0.368 | 0.182 | 0.550 | 0.61 |
| Example 3 | 0.331 | 0.273 | 0.604 | 0.90 |
| Example 4 | 0.302 | 0.224 | 0.526 | 0.53 |
| Example 5 | 0.346 | 0.186 | 0.532 | 0.39 |
| Comparative Example 1 | 0.426 | 0.226 | 0.652 | 1.04 |
| Comparative Example 2 | 0.460 | 0.182 | 0.642 | 0.84 |
| Comparative Example 3 | 0.389 | 0.193 | 0.582 | 0.90 |
| Comparative Example 4 | 0.315 | 0.328 | 0.643 | 1.07 |

Referring to Table 1, although the positive electrode active materials prepared in Examples 1 to 5 were Ni-rich positive electrode active materials having 70 mol% or more of Ni, the residual amounts of the lithium by-products were low at 0.65 wt% or less. Also, with respect to the positive electrode active materials prepared in Examples 1, 2, 4, and 5, since the coating portions were formed by performing a heat treatment at 600°C or more, BET specific surface areas were 0.7 m²/g or less. However, with respect to Example 3 using Al₄C₃, its BET specific surface area was somewhat higher than those of Examples 1, 2, 4, and 5 due to a decrease in reactivity. With respect to Comparative Example 4 in which the coating portion was formed by performing a heat treatment at 500°C, its BET specific surface area was 1.07 m²/g, which was about 1.6 times greater than those of Examples 1, 2, 4, and 5.

### [Experimental Example 2: Initial Resistance Evaluation]

Each of the positive electrode active materials prepared in Examples 1 to 5 and Comparative Examples 1 to 4, a carbon black conductive agent, and a PVdF binder were mixed in an N-methylpyrrolidone solvent at a weight ratio of 96:2:2 to prepare a positive electrode material mixture, and one surface of an aluminum current collector was coated with the positive electrode material mixture, dried at 100°C, and then rolled to prepare a positive electrode.

Lithium metal was used as a negative electrode.

Each lithium secondary battery was prepared by preparing an electrode assembly by disposing a porous polyethylene separator between the positive electrode and negative electrode prepared as described above, disposing the electrode assembly in a case, and then injecting an electrolyte solution into the case. In this case, the electrolyte solution was prepared by dissolving 1.0 M lithium hexafluorophosphate (LiPF₆) in an organic solvent composed of ethylene carbonate/ethylmethyl carbonate/diethyl carbonate (mixing volume ratio of EC/EMC/DEC=3/4/3).

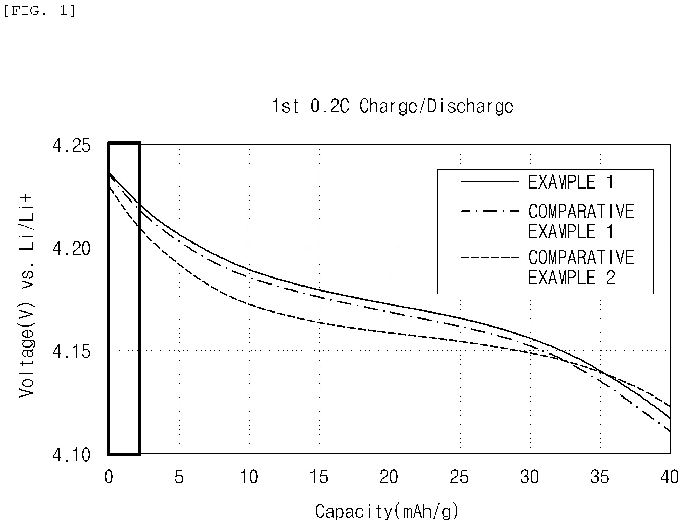

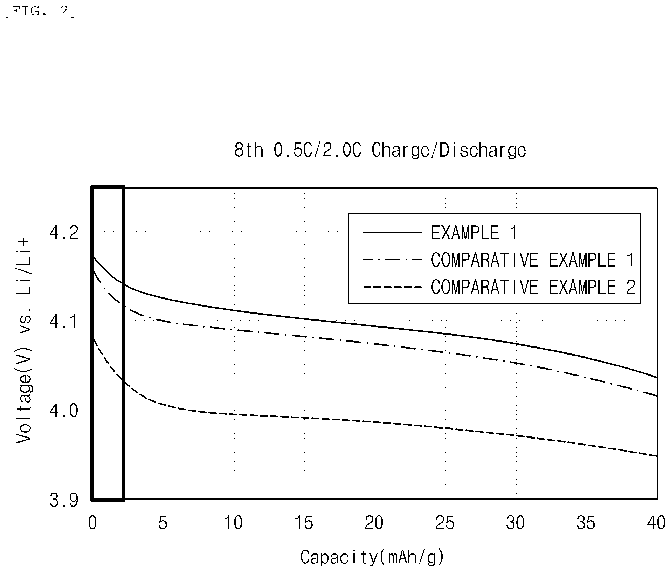

Each lithium secondary battery half cell prepared as described above was charged at 0.2 C to a voltage of 4.25 V in a constant current/constant voltage (CCCV) mode at 25°C, and discharged at a constant current of 0.2 C to measure initial resistance at 60 seconds. Also, each half cell was charged at 0.5 C to a voltage of 4.25 V in a CCCV mode at 25°C, and discharged at a constant current of 2.0 C to measure initial resistance at 60 seconds. The results thereof are presented in FIG. 1 (0.2 C discharge) and FIG. 2 (2.0 C discharge), respectively, and Table 2 below.

**[Table 2]**

| | Initial resistance 0.2C discharge at 60 sec. (Ω) | Initial resistance 2.0C discharge at 60 sec. (Ω) |
|---|---|---|
| Example 1 | 15.0 | 12.7 |
| Example 2 | 16.2 | 12.7 |
| Example 3 | 15.1 | 13.0 |
| Example 4 | 14.3 | 11.5 |
| Example 5 | 15.4 | 12.9 |
| Comparative Example 1 | 16.3 | 14.6 |
| Comparative Example 2 | 21.7 | 23.2 |
| Comparative Example 3 | 15.0 | 12.9 |
| Comparative Example 4 | 17.3 | 13.8 |

With respect to the secondary batteries using the positive electrode active materials prepared in Examples 1 to 5, it may be confirmed that initial resistances were significantly reduced in comparison to those of the secondary batteries using the positive electrode active materials of Comparative Examples 1, 2, and 4. Particularly, with respect to Comparative Example 2 on which boron (B) coating was performed, its initial resistance value was relatively higher than those of Examples 1 to 5.

### [Experimental Example 3: Life Characteristics and Resistance Increase Rate Evaluation]

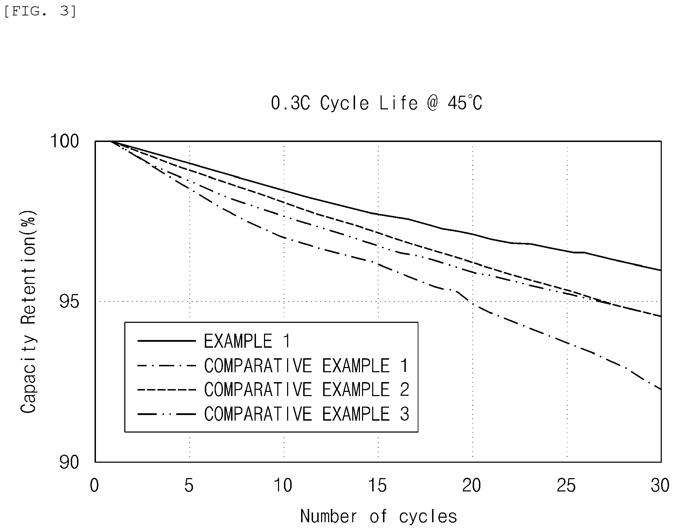

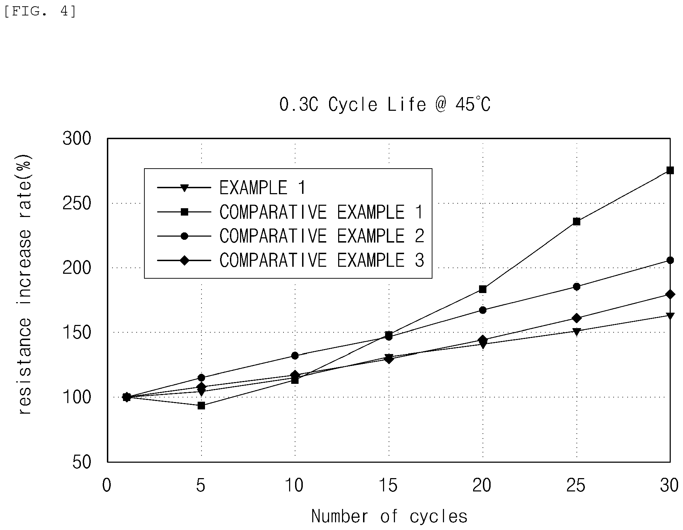

Each lithium secondary battery half cell, which was prepared as in Experimental Example 2 by using each of the positive electrode active materials prepared in Examples 1 to 5 and Comparative Examples 1 to 4, was charged at 0.2 C to a voltage of 4.25 V in a CCCV mode at 25°C, and discharged at 0.2 C in a CC mode to measure initial capacity and resistance at 60 seconds. Thereafter, each half cell was charged at 0.33 C to a voltage of 4.25 V in a CCCV mode at 45°C, and discharged at a constant current of 0.33 C to a voltage of 2.5 V to measure capacity retention and resistance increase rate when 30 cycles of charge and discharge were performed. The results thereof are presented in FIG. 3 (capacity retention), FIG. 4 (resistance increase rate), and Table 3 below.

**[Table 3]**

| | Capacity retention (%) (@30 cycles) | Resistance increase rate (%) (@30 cycles) |
|---|---|---|
| Example 1 | 96.0 | 161.8 |
| Example 2 | 95.4 | 180.1 |
| Example 3 | 95.0 | 185.6 |
| Example 4 | 95.9 | 161.7 |
| Example 5 | 96.3 | 195.7 |
| Comparative Example 1 | 92.0 | 266.8 |
| Comparative Example 2 | 94.6 | 207.6 |
| Comparative Example 3 | 94.6 | 183.9 |
| Comparative Example 4 | 94.9 | 205.2 |

Referring to Table 3 and FIGS. 3 and 4, with respect to the secondary batteries using the positive electrode active materials prepared in Examples 1 to 5, it may be confirmed that capacity retentions were increased in comparison to those of the secondary batteries using the positive electrode active materials of Comparative Examples 1 to 4. With respect to the secondary batteries using the positive electrode active materials prepared in Examples 1 to 5, it may be confirmed that resistance increase rates were significantly reduced in comparison to those of the secondary batteries using the positive electrode active materials of Comparative Examples 1, 2, and 4, and, particularly, with respect to Examples 1 and 4, an effect of reducing the resistance increase rate was better.

## Claims

1. A positive electrode active material for a secondary battery, the positive electrode active material comprising:
lithium composite transition metal oxide particles including 70 mol% or more of nickel (Ni) among total metals excluding lithium; and
a coating portion formed on surfaces of the lithium composite transition metal oxide particles,
wherein the coating portion comprises a compound including fluorine and at least one selected from the group consisting of aluminum (Al), titanium (Ti), magnesium (Mg), zirconium (Zr), tungsten (W), and strontium (Sr),
wherein the positive electrode active material has a Brunauer-Emmett-Teller (BET) specific surface area in a range of 0.1 m²/g to 0.9 m²/g, and
wherein an amount of a lithium by-product on a surface of the positive electrode active material is 0.65 wt% or less based on a total weight of the positive electrode active material.

2. The positive electrode active material for a secondary battery of claim 1, wherein the BET specific surface area of the positive electrode active material is in a range of 0.3 m²/g to 0.7 m²/g.

3. The positive electrode active material for a secondary battery of claim 1, wherein the amount of the lithium by-product on the surface of the positive electrode active material is 0.56 wt% or less based on the total weight of the positive electrode active material.

4. A method of preparing the positive electrode active material for a secondary battery of claim 1, the method comprising:
washing a lithium composite transition metal oxide, wherein the lithium composite transition metal oxide including 70 mol% or more of nickel (Ni) among total metals excluding lithium; and
mixing the washed lithium composite transition metal oxide, a fluorine-based polymer, and a metal coating source including at least one metal selected from the group consisting of aluminum (Al), titanium (Ti), magnesium (Mg), zirconium (Zr), tungsten (W), and strontium (Sr); and
heat treating the mixture at 600°C or more to form a coating portion on surfaces of the lithium composite transition metal oxide.

5. The method of claim 4, wherein the fluorine-based polymer comprises at least one selected from the group consisting of polyvinylidene fluoride (PVDF), polyvinylidene fluoride-hexafluoroethylene copolymer (PVDF-co-HFP), polytetrafluoroethylene (PTFE), and perfluoroalkoxy (PFA).

6. The method of claim 4, wherein the metal coating source comprises at least one selected from the group consisting of Al(OH)₃, Al₂O₃, TiO₂, Zr(OH)₄, ZrO₂, Mg(OH)₂, MgO, H₂WO₄, WO₃, Sr(OH)₂, and SrO.

7. The method of claim 4, wherein the fluorine-based polymer is polyvinylidene fluoride (PVDF) and the metal coating source is Al(OH)₃.

8. The method of claim 4, wherein the temperature of the heat treatment ranges at 700°C to 800°C.

9. The method of claim 4, wherein the fluorine-based polymer is mixed in an amount of 0.03 part by weight to 5 parts by weight based on 100 parts by weight of the lithium composite transition metal oxide.

10. The method of claim 4, wherein the metal coating source is mixed in an amount of 0.01 part by weight to 5 parts by weight based on 100 parts by weight of the lithium composite transition metal oxide.

11. The method of claim 4, wherein the fluorine-based polymer and the metal coating source are mixed in a part by weight ratio of 1:0.01 to 1:5.

12. The method of claim 4, wherein the washing comprises:
washing the lithium composite transition metal oxide for 3 minutes to 60 minutes in a washing liquid at 1°C to 80°C.

13. The method of claim 4, wherein the washing liquid and the lithium composite transition metal oxide are present in a part by weight ratio of 100:20 to 100:300.

14. A positive electrode for a secondary battery, the positive electrode comprising the positive electrode active material of any one of claims 1 to 3.

15. A lithium secondary battery comprising the positive electrode of claim 14.

## Patentansprüche

1. Positives Elektrodenaktivmaterial für eine Sekundärbatterie, wobei das positive
Elektrodenaktivmaterial umfasst:
Lithium-Übergangsmetall-Mischoxidpartikel, die 70 mol-% oder mehr Nickel (Ni) unter den gesamten Metallen ausschließlich Lithium enthalten, und
einen Beschichtungsabschnitt, der auf Oberflächen der Lithium-Übergangsmetall-Mischoxidpartikel gebildet ist,
wobei der Oberflächenabschnitt eine Verbindung umfasst, die Fluor und mindestens eines, ausgewählt aus der Gruppe, bestehend aus Aluminium (Al), Titan (Ti), Magnesium (Mg), Zirkonium (Zr), Wolfram (W) und Strontium (Sr), enthält,
wobei das positive Elektrodenaktivmaterial eine spezifische Brunauer-Emmett-Teller (BET)-Oberflächen in einem Bereich von 0,1 m²/g bis 0,9 m²/g aufweist und
wobei eine Menge eines Lithiumnebenprodukts auf einer Oberfläche des positiven Elektrodenaktivmaterials 0,65 Gew.-% oder weniger, bezogen auf die Gesamtmenge des positiven Elektrodenaktivmaterials, beträgt.

2. Positives Elektrodenaktivmaterial für eine Sekundärbatterie gemäß Anspruch 1, wobei die spezifische BET-Oberfläche des positiven Elektrodenaktivmaterials in einem Bereich von 0,3 m²/g bis 0,7 m²/g liegt.

3. Positives Elektrodenaktivmaterial für eine Sekundärbatterie gemäß Anspruch 1, wobei die Menge des Lithiumnebenprodukts auf der Oberfläche des positiven Elektrodenaktivmaterials 0,56 Gew.-% oder weniger, bezogen auf das Gesamtgewicht des positiven Elektrodenaktivmaterials, beträgt.

4. Verfahren zur Herstellung des positiven Elektrodenaktivmaterials für eine Sekundärbatterie gemäß Anspruch 1, wobei das Verfahren umfasst:
Waschen eines Lithium-Übergangsmetall-Mischoxids, wobei das Lithium-Übergangsmetall-Mischoxid 70 mol-% oder mehr Nickel (Ni) unter den gesamten Metallen ausschließlich Lithium enthält, und
Mischen des gewaschenen Lithium-Übergangsmetall-Mischoxids, eines fluorbasierten Polymers und einer Metallbeschichtungsquelle, die mindestens ein Metall, ausgewählt aus der Gruppe, bestehend aus Aluminium (Al), Titan (Ti), Magnesium (Mg), Zirkonium (Zr), Wolfram (W) und Strontium (Sr), enthält, und
Wärmebehandeln der Mischung bei 600°C oder mehr, um einen Beschichtungsabschnitt auf Oberflächen des Lithium-Übergangsmetall-Mischoxids zu bilden.

5. Verfahren gemäß Anspruch 4, wobei das fluorbasierte Polymer mindestens eines, ausgewählt aus der Gruppe, bestehend aus Polyvinylidenfluorid (PVDF), Polyvinylidenfluoridhexafluorethylen-Copolymer (PVDF-co-HFP), Polytetrafluorethylen (PTFE) und Perfluoralkoxy (PFA), umfasst.

6. Verfahren gemäß Anspruch 4, wobei die Metallbeschichtungsquelle mindestens eines, ausgewählt aus der Gruppe, bestehend aus Al(OH)₃, Al₂O₃, TiO₂, Zr(OH)₄, ZrO₂, Mg(OH)₂, MgO, H₂WO₄, WO₃, Sr(OH)₂ und SrO, umfasst.

7. Verfahren gemäß Anspruch 4, wobei das fluorbasierte Polymer Polyvinylidenfluorid (PVDF) ist und die Metallbeschichtungsquelle Al(OH)₃ ist.

8. Verfahren gemäß Anspruch 4, wobei die Temperatur der Wärmebehandlung von 700°C bis 800°C reicht.

9. Verfahren gemäß Anspruch 4, wobei das fluorbasierte Polymer in einer Menge von 0,03 Gewichtsteile bis 5 Gewichtsteile, bezogen auf 100 Gewichtsteile des Lithium-Übergangsmetall-Mischoxids, beigemengt wird.

10. Verfahren gemäß Anspruch 4, wobei die Metallbeschichtungsquelle in einer Menge von 0,01 Gewichtsteile bis 5 Gewichtsteile, bezogen auf 100 Gewichtsteile des Lithium-Übergangsmetall-Mischoxids, beigemengt wird.

11. Verfahren gemäß Anspruch 4, wobei das fluorbasierte Polymer und die Metallbeschichtungsquelle in einem Gewichtsteileverhältnis von 1:0,01 bis 1:5 gemischt werden.

12. Verfahren gemäß Anspruch 4, wobei das Waschen umfasst:
Waschen des Lithium-Übergangsmetall-Mischoxids für 3 Minuten bis 60 Minuten in einer Waschflüssigkeit bei 1°C bis 80°C.

13. Verfahren gemäß Anspruch 4, wobei die Waschflüssigkeit und das Lithium-Übergangsmetall-Mischoxid in einem Gewichtsteileverhältnis von 100:20 bis 100:300 vorliegen.

14. Positive Elektrode für eine Sekundärbatterie, wobei die positive Elektrode das positive Elektrodenaktivmaterial gemäß einem der Ansprüche 1 bis 3 umfasst.

15. Lithiumsekundärbatterie, umfassend die positive Elektrode gemäß Anspruch 14.

## Revendications

1. Matériau actif d'électrode positive pour une batterie secondaire, le matériau actif d'électrode positive comprenant :
des particules d'oxyde de métal de transition composite au lithium incluant 70 % en mole ou plus de nickel (Ni) parmi tous les métaux à l'exclusion du lithium ; et
une partie de revêtement formée sur les surfaces des particules d'oxyde de métal de transition composite au lithium,
dans lequel la partie de revêtement comprend un composé incluant du fluor et au moins un sélectionné dans le groupe consistant en l'aluminium (AI), le titane (Ti), le magnésium (Mg), le zirconium (Zr), le tungstène (W) et le strontium (Sr),
dans lequel le matériau actif d'électrode positive présente une surface spécifique de Brunauer-Emmett-Teller (BET) dans une plage de 0,1 m²/g à 0,9 m²/g, et
dans lequel une quantité d'un sous-produit de lithium sur une surface du matériau actif d'électrode positive est de 0,65 % en poids ou moins sur la base d'un poids total du matériau actif d'électrode positive.

2. Matériau actif d'électrode positive pour une batterie secondaire selon la revendication 1, dans lequel la surface spécifique BET du matériau actif d'électrode positive est dans une plage de 0,3 m²/g à 0,7 m²/g.

3. Matériau actif d'électrode positive pour une batterie secondaire selon la revendication 1, dans lequel la quantité du sous-produit de lithium sur la surface du matériau actif d'électrode positive est de 0,56 % en poids ou moins sur la base du poids total du matériau actif d'électrode positive.

4. Procédé de préparation du matériau actif d'électrode positive pour une batterie secondaire selon la revendication 1, le procédé comprenant :
le lavage d'un oxyde de métal de transition composite au lithium, dans lequel l'oxyde de métal de transition composite au lithium inclut 70 % en mole ou plus de nickel (Ni) parmi tous les métaux à l'exclusion du lithium ; et
le mélange de l'oxyde de métal de transition composite au lithium lavé, d'un polymère à base de fluor, et d'une source de revêtement métallique incluant au moins un métal sélectionné dans le groupe consistant en l'aluminium (AI), le titane (Ti), le magnésium (Mg), le zirconium (Zr), le tungstène (W) et le strontium (Sr) ; et
le traitement thermique du mélange à 600°C ou plus pour former une partie de revêtement sur les surfaces de l'oxyde de métal de transition composite au lithium.

5. Procédé selon la revendication 4, dans lequel le polymère à base de fluor comprend au moins un sélectionné dans le groupe consistant en un polyfluorure de vinylidène (PVDF), un copolymère de polyfluorure de vinylidène-hexafluoroéthylène (PVDF-co-HFP), un polytétrafluoroéthylène (PTFE) et un perfluoroalcoxy (PFA).

6. Procédé selon la revendication 4, dans lequel la source de revêtement métallique comprend au moins un sélectionné dans le groupe consistant en Al(OH)₃, Al₂O₃, TiO₂, Zr(OH)₄, ZrO₂, Mg(OH)₂, MgO, H₂WO₄, WO₃, Sr(OH)₂ et SrO.

7. Procédé selon la revendication 4, dans lequel le polymère à base de fluor est un polyfluorure de vinylidène (PVDF) et la source de revêtement métallique est AI(OH)3.

8. Procédé selon la revendication 4, dans lequel la température du traitement thermique est de 700°C à 800 °C.

9. Procédé selon la revendication 4, dans lequel le polymère à base de fluor est mélangé en une quantité de 0,03 partie en poids à 5 parties en poids sur la base de 100 parties en poids de l'oxyde de métal de transition composite au lithium.

10. Procédé selon la revendication 4, dans lequel la source de revêtement métallique est mélangée en une quantité de 0,01 partie en poids à 5 parties en poids sur la base de 100 parties en poids de l'oxyde de métal de transition composite au lithium.

11. Procédé selon la revendication 4, dans lequel le polymère à base de fluor et la source de revêtement métallique sont mélangés à un rapport en parties en poids de 1: 0,01 à 1 : 5.

12. Procédé selon la revendication 4, dans lequel le lavage comprend :
le lavage de l'oxyde de métal de transition composite au lithium pendant 3 minutes à 60 minutes dans un liquide de lavage à 1 °C à 80 °C.

13. Procédé selon la revendication 4, dans lequel le liquide de lavage et l'oxyde de métal de transition composite au lithium sont présents à un rapport en parties en poids de 100 : 20 à 100 : 300.

14. Électrode positive pour une batterie secondaire, l'électrode positive comprenant le matériau actif d'électrode positive selon l'une quelconque des revendications 1 à 3.

15. Batterie secondaire au lithium comprenant l'électrode positive selon la revendication 14.
